# EUROPEAN PATENT APPLICATION

(11) **EP 4 656 670 A1**
(43) Date of publication of application: **03.12.2025**
(21) Application number: 25171963.9
(22) Date of filing: 23.04.2025
(51) Int. Cl.: C08G 73/10, C09D 179/08

(54) **POLYIMIDE VARNISH WITH IMPROVED ADHESION AND POLYIMIDE FILM COMPRISING THE SAME**

(30) Priority: 31.05.2024 KR 20240071249
(71) Applicant: PI Advanced Materials Co., Ltd., Chungcheongbuk-do 27818 (KR)
(72) Inventor: Yoo, Cheol Hun, 27818 Chungcheongbuk-do (KR); We, Jung Hoon, 27818 Chungcheongbuk-do (KR); Moon, Gyeong Min, 27818 Chungcheongbuk-do (KR); Park, Se Joo, 27818 Chungcheongbuk-do (KR); Lee, Ik Sang, 27818 Chungcheongbuk-do (KR)
(74) Representative: Acapo Onsagers AS

(57) **Abstract**

The present invention provides a polyimide varnish comprising a dianhydride monomer and a diamine monomer as polymerization units, wherein the diamine monomer comprises a first diamine monomer and a second diamine monomer, and the second diamine monomer is represented by the following Chemical Formula 1. The polyimide varnish of the present invention has excellent adhesion and adherence to wires such as copper, and thus has excellent usability as an insulating coating material for an electric wire, etc. 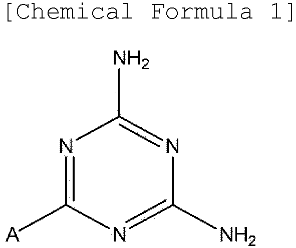 in Chemical Formula 1 above,
A may be unsubstituted or substituted, and is hydrogen, halogen, C₁-C₆ alkyl, phenyl, (C₁-C₆ alkylene) - (C₃-C₅ heteroaryl), (C₁-C₆ alkylene) -COOH, or -OH, wherein the substitution means substitution with halogen, C₁-C₃ alkyl, C₁-C₃ haloalkyl or oxo(=O).

## Description

### CROSS-REFERENCE TO RELATED APPLICATIONS

This application claims priority under 35 U.S.C. §119 to Korean Patent Application No. 10-2024-0071249, filed on May 31, 2024, in the Korean Intellectual Property Office, the disclosure of which is incorporated herein by reference in its entirety.

### TECHNICAL FIELD

The present invention relates to a polyimide varnish and a polyimide film comprising the same, and more specifically, to a polyimide varnish having excellent adhesion to wires and a polyimide film comprising the same.

### BACKGROUND

In general, polyimide (PI) resin refers to a highly heat-resistant resin obtained by performing solution polymerization on aromatic dianhydride and aromatic diamine or aromatic diisocyanate to prepare a polyamic acid derivative, followed by ring-closure dehydration at high temperature and imidization. The polyimide resin is an insoluble, infusible, ultra-high heat-resistant resin and has excellent properties such as thermal oxidation resistance, heat resistance, radiation resistance, lowtemperature characteristics, chemical resistance, and the like, and thus it is used in a wide range of fields, including heat-resistant advanced materials such as automotive materials, aviation materials, and spacecraft materials, etc., and electronic materials such as insulating coatings, insulating films, semiconductors, and electrode protective films of TFT-LCD. Recently, the polyimide resin is also used in display materials such as optical fibers and liquid crystal alignment films, transparent electrode films by containing conductive filler in the films or performing surface coating, etc.

In particular, insulated wires used as windings for coils such as motors require a conductor-coating insulation layer (insulating film) that offers excellent insulation, adherence to the conductor, heat resistance, mechanical strength, etc. Therefore, polyimide is used as a resin to form the insulation layer.

Meanwhile, despite excellent physical properties thereof, general polyimide resin does not have excellent adhesion to conductors, and thus problems of appearance defects may occur when forming an insulating coating. As described above, there are many difficulties in improving the properties required for polyimide varnishes and polyimide resins manufactured therefrom, and in particular, since it is common for one property to be improved while another property is deteriorated, achieving the simultaneous fulfillment of multiple properties remains a persistent area of research in the relevant technical fields.

Therefore, there is a significant demand for a polyimide varnish for conductor coating that simultaneously satisfies the heat resistance, insulation, and mechanical properties of polyimide, while also offering excellent adhesion to conductors.

### SUMMARY

An object of the present invention is to provide a polyimide varnish comprising an azine-based diamine to exhibit excellent adhesion and adherence to wires.

Another object of the present invention is to provide a polyimide cured product (or film) manufactured by curing the polyimide varnish.

Still another object of the present invention is to provide a polyimide coating material comprising a cured product of the polyimide varnish.

Various modifications can be made and various embodiments may be implemented in the present invention, and specific embodiments are described in detail. However, it should be understood that this is not intended to limit the present invention to specific embodiments, and comprises all modifications, equivalents, and substitutes included in the spirit and scope of the present invention.

Terms used in the present application are only used to describe specific embodiments and are not intended to limit the present invention. Singular expressions shall include plural expressions unless the context clearly indicates otherwise. In the present specification, terms such as "comprise" or "have" are intended to designate the presence of features, numbers, steps, operations, components, parts, or combinations thereof described in the specification and it should not be understood as precluding the possibility of the presence or addition of one or more other features, numbers, steps, operations, components, parts, or combinations thereof.

When amounts, concentrations, or other values or parameters herein are given as ranges, preferred ranges, or lists of upper desirable values and lower desirable values, it should be understood as specifically disclosing all ranges formed by any pair of any upper range limit or preferred value and any lower range limit or preferred value, regardless of whether the scope is separately disclosed.

When ranges of numerical values are stated herein, unless otherwise stated, it is intended that the endpoints of the range and the scope of the parent invention within the range are not limited to the specific values stated when defining the range.

As used herein, "dianhydride" is intended to include precursors or derivatives thereof, which are also referred to as ""dianhydride acid", "dianhydride" or "acid dianhydride". These products may technically not be dianhydrides, but will nonetheless react with diamines to form polyamic acids, and the polyamic acids may be converted back into polyimides.

As used herein, "diamine" is intended to include precursors or derivatives thereof, which may technically not be diamines, but will nonetheless react with dianhydride acids to form polyamic acids, and the polyamic acids may be converted back into polyimides.

As used herein, the term "halogen" means a substituent selected from fluorine (F), chloro (Cl), bromo (Br) and iodo (I).

As used herein, the term "unsubstituted" means a state in which it is not substituted with any substituent, indicating either its absence or the presence of a hydrogen.

As used herein, the term "substituted" refers to a moiety having a substituent that replaces hydrogen on one or more carbons of the main chain. "Substitution" or "substituted with" depends on whether such substitution is permissible for the substituted atom and substituent, and it is defined to include the implicit conditions that leads to stable compounds by substitution, for example, compounds that are not naturally modified by rearrangement, cyclization, elimination, and the like.

In the present invention, "C_{x-y}" means having a carbon number of x or more and y or less.

As used herein, the term "C₁-C₆ alkyl" means a C₁-C₆ straight-chain or branched-chain saturated hydrocarbon, such as, for example, methyl, ethyl, propyl, n-propyl, isopropyl, butyl, n-butyl, isobutyl, tert-butyl, sec-butyl, 1-methylbutyl, 1-ethyl-butyl, pentyl, n-pentyl, isopentyl, neopentyl, tert-pentyl, hexyl, n-hexyl, 1-methylpentyl, 2-methylpentyl, 4-methyl-2-pentyl, 3,3-dimethylbutyl, 2-ethylbutyl, and the like. Preferred alkyl groups include about 1, 2, 3, 4, 5 or 6 carbon atoms in the chain.

As used herein, the term "C₁-C₆ alkylene" may be straight-chain or branched-chain, and specifically means a saturated aliphatic hydrocarbon such as a methylene group, an ethylene group, a propylene group, an isopropylene group, a butylene group, an isobutylene group, a sec-butylene group, a t-butylene group, an n-pentylene group, or an n-hexylene group. The term "alkylene" may be unsubstituted or may be optionally substituted with one or more substituents that may be the same or different.

The term "C₁-C₃ haloalkyl" as used herein means a C₁-C₃ straight-chain or branched-chain saturated hydrocarbon in which at least one hydrogen atom is substituted with a halogen atom (i.e., F, Cl, Br, or I). Examples of the C₁-C₃ haloalkyl may include, but are not limited to, CH₂F, CHF₂, CF₃, etc.

The term "C₃-C₅ heteroaryl" as used herein refers to an optionally substituted aromatic ring containing 3 to 5 carbon atoms, in which at least one of the ring carbon atoms is substituted with a heteroatom selected from oxygen (O), nitrogen (N) and sulfur (S), or an aromatic ring (e.g., a bicyclic or tricyclic ring system) fused to one or more rings such as a heteroaryl ring, an aryl ring, a heterocyclic ring, or a carbocyclic ring, each of which may have an optional substituent. Examples of the C₃-C₅ heteroaryl may include heteroaryl including, but not limited to, pyrrole, pyrazole, imidazole, furan, isoxazole, oxazole, thiophene, isothiazole, thiazole, pyridine, pyridazine, pyrimidine, pyrazine, or triazine (e.g., 1,2,4-triazine, 1,3,5-triazine). Further, the heteroaryl may be substituted or unsubstituted.

Unless defined otherwise, all terms used herein, including technical or scientific terms, have the same meaning as commonly understood by one of ordinary skill in the art to which the present invention belongs. Terms such as those defined in commonly used dictionaries should be interpreted as having a meaning consistent with the meaning in the context of the related art, and unless explicitly defined in the present application, it is not to be construed in an idealized or overly formal sense. Specific details for the implementation of the invention will be described below.

### Polyimide Varnish

The present invention relates to a polyimide varnish capable of providing improved adhesion and adherence to wires and being usable for application in conductor coating.

The present invention provides a polyimide varnish comprising a dianhydride monomer and a diamine monomer as polymerization units, wherein the diamine monomer comprises a first diamine monomer and a second diamine monomer, and the second diamine monomer is represented by the following Chemical Formula 1: 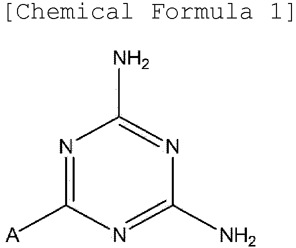 in Chemical Formula 1 above,
A may be unsubstituted or substituted, and is hydrogen, halogen, C₁-C₆ alkyl, phenyl, (C₁-C₆ alkylene) - (C₃-C₅ heteroaryl), (C₁-C₆ alkylene) -COOH, or -OH, wherein the substitution means substitution with halogen, C₁-C₃ alkyl, C₁-C₃ haloalkyl or oxo(=O).

Specifically, the A is hydrogen, fluoro (F), chloro (Cl), bromo (Br), methyl, ethyl, propyl, phenyl, (C₁-C₆ alkylene) -imidazolyl, (C₁-C₆ alkylene) -COOH, or -OH, and the A may be unsubstituted or substituted with at least one or more methyl, ethyl, trifluoromethyl, or oxo(=O).

More specifically, the A is hydrogen, fluoro (F), chloro (Cl), methyl, ethyl, propyl, phenyl, methylene-imidazolyl, ethylene-imidazolyl, propylene-imidazolyl, methylene-COOH, ethylene-COOH, propylene-COOH, butylene-COOH, or -OH, and the A may be unsubstituted or substituted with at least one or more methyl, ethyl, trifluoromethyl, or oxo (=O).

More specifically, the A may be hydrogen, fluoro (F), chloro (Cl), methyl, ethyl, propyl, phenyl, methyl-substituted methylene-imidazolyl, methyl-substituted ethylene-imidazolyl, methyl-substituted propylene-imidazolyl, oxo (=O)-substituted methylene-COOH, oxo (=O)-substituted ethylene-COOH, oxo (=O)-substituted propylene-COOH, oxo (=O)-substituted butylene-COOH, or -OH.

In Chemical Formula 1 above, a carbon-to-nitrogen ratio (C/N) may be 0.5 to 2.5, preferably 0.6 to 2.1, and more preferably 0.7 to 1.9.

The second diamine monomer may comprise a triazine-based diamine, specifically, at least one selected from the group consisting of 1,3,5-triazine-2,4-diamine, 6-chloro-1,3,5-triazine-2,4-diamine, 4,6-diamino-1,3,5-triazin-2-ol, 6-methyl-1,3,5-triazine-2,4-diamine, 6-phenyl-1,3,5-triazine-2,4-diamine, 6-[2-(2-methylimidazol-1-yl)ethyl]-1,3,5-triazine-2,4-diamine, and 4-(4,6-diamino-1,3,5-triazin-2-yl)-4-oxobutanoic acid.

In an embodiment, the second diamine monomer may be 6-chloro-1,3,5-triazine-2,4-diamine alone, 4,6-diamino-1,3,5-triazin-2-ol alone, 6-methyl-1,3,5-triazine-2,4-diamine alone, 2,6-diamino-4-phenyl-1,3,5-triazine alone, 6-[2-(2-methylimidazol-1-yl)ethyl]-1,3,5-triazine-2,4-diamine alone, or 4-(4,6-diamino-1,3,5-triazin-2-yl)-4-oxobutanoic acid alone.

The second diamine monomer, which contains a functional group capable of forming a coordination bond with Cu, may be contained in the polyimide chain to improve adhesion, thereby preventing peeling of the coating layer caused by low adhesive property between the conductor and the polyimide insulator. In addition, physical properties of the polyimide film may be adjusted to suit the purpose after curing a varnish.

In the present invention, based on 100 mol% of the total amount of the diamine monomers, an amount of the first diamine monomer may be more than 80 mol% and less than or equal to 99.9 mol%, and an amount of the second diamine monomer may be 0.1 mol% or more and less than 20 mol%.

Preferably, based on 100 mol% of the total amount of the diamine monomers, the amount of the first diamine monomer may be more than 90 mol% and less than or equal to 99.9 mol%, and the amount of the second diamine monomer may be 0.1 mol% or more and less than 10 mol%.

More preferably, based on 100 mol% of the total amount of the diamine monomers, the amount of the first diamine monomer may be 90.5 mol% to 99 mol%, 91 mol% to 98 mol%, or 91 mol% to 95 mol%, and the amount of the second diamine monomer may be 1 mol% to 9.5 mol%, 2 mol% to 9 mol%, or 5 mol% to 9 mol%.

When the varnish is cured in a range where the amount of the second diamine monomer is 0.1 mol% or more and less than 10 mol%, it is preferable since the film is formed without breaking and exhibits excellent physical properties.

Further, based on 100 mol% of the total amount of the diamine monomers, an amount of the second diamine monomer may be 0.1 mol% or more and less than 10 mol%. For example, the lower limit of the second diamine monomer may be 0.2 mol% or more, 0.5 mol% or more, 1.0 mol% or more, 1.5 mol% or more, 2.0 mol% or more, 3.0 mol% or more, 4.0 mol% or more, or 5.0 mol% or more, and the upper limit thereof may be 9.9 mol% or less, 9.5 mol% or less, 9 mol% or less, 8 mol% or less, 7 mol% or less, 6 mol% or less, or 5 mol% or less.

Further, the amount of the second diamine monomer may be 0.05 mol% or more and less than 10 mol% based on 100 mol% of the total polyimide varnish.

In the present invention, the dianhydride monomer may comprise at least one selected from the group consisting of pyromellitic dianhydride (PMDA), biphenyl tetracarboxylic dianhydride (BPDA), benzophenone tetracarboxylic dianhydride (BTDA), oxidiphthalic dianhydride (ODPA), diphenylsulfone-3,4,3',4'-tetracarboxylic dianhydride (DSDA), bis(3,4-dicarboxyphenyl)sulfide dianhydride, 2,2-bis(3,4-dicarboxyphenyl)-1,1,1,3,3,3-hexafluoropropane dianhydride, 2,3,3',4'-benzophenone tetracarboxylic dianhydride, bis(3,4-dicarboxyphenyl)methane dianhydride, 2,2-bis(3,4-dicarboxyphenyl) propane dianhydride, p-phenylenebis(trimelytic monoester acid anhydride), p-biphenylenebis(trimelytic monoester acid anhydride), m-terphenyl-3,4,3',4'-tetracarboxylic dianhydride, p-terphenyl-3,4,3',4'-tetracarboxylic dianhydride, 1,3-bis(3,4-dicarboxyphenoxy)benzene dianhydride, 1,4-bis(3,4-dicarboxyphenoxy) benzene dianhydride, 1,4-bis(3,4-dicarboxyphenoxy)biphenyl dianhydride, 2,2-bis[(3,4-dicarboxyphenoxy) phenyl] propane dianhydride (BPADA), 2,3,6,7-naphthalene tetracarboxylic dianhydride, 1,4,5,8-naphthalenetetracarboxylic dianhydride, and 4,4'-(2,2-hexafluoroisopropylidene)diphthalic acid dianhydride.

Specifically, the dianhydride monomer may comprise at least one selected from the group consisting of pyromellitic dianhydride (PMDA), biphenyl tetracarboxylic dianhydride (BPDA), and benzophenone tetracarboxylic dianhydride (BTDA), and preferably, pyromellitic dianhydride (PMDA).

Further, the first diamine monomer may include at least one selected from the group consisting of paraphenylenediamine (PPD), 4,4'-diaminodiphenyl ether (ODA), 2,2-bisaminophenoxyphenyl propane (BAPP), metaphenylenediamine (MPD), 3,3'-dimethylbenzidine, 2,2'-dimethylbenzidine, 2,4-diaminotoluene, 2,6-diaminotoluene, 3,5-diaminobenzoic acid (DABA), 3,4'-diaminodiphenyl ether, 4,4'-diaminodiphenylmethane (MDA), 3,3'-dimethyl-4,4'-diaminobiphenyl, 2,2'-dimethyl-4,4'-diaminobiphenyl(m-tolidine), 2,2'-bis(trifluoromethyl)-4,4'-diaminobiphenyl, 3,3'-dimethyl-4,4'-diaminodiphenylmethane, 3,3'-dicarboxy-4,4'-diaminodiphenylmethane, 3,3',5,5'-tetramethyl-4,4'-diaminodiphenylmethane, bis(4-aminophenyl)sulfide, 4,4'-diaminobenzanilide, 3,3'-dimethoxybenzidine, 2,2'-dimethoxybenzidine, 3,3'-diaminodiphenylether, 3,3'-diaminodiphenylsulfide, 3,4'-diaminodiphenylsulfide, 4,4'-diaminodiphenylsulfide, 3,3'-diaminodiphenylsulfone, 3,4'-diaminodiphenylsulfone, 4,4'-diaminodiphenylsulfone, 3,3'-diaminobenzophenone, 4,4'-diaminobenzophenone, 3,3'-diamino-4,4'-dichlorobenzophenone, 3,3'-diamino-4,4'-dimethoxybenzophenone, 3,3'-diaminodiphenylmethane, 3,4'-diaminodiphenylmethane, 2,2-bis(3-aminophenyl)propane, 2,2-bis(4-aminophenyl)propane, 2,2-bis(3-aminophenyl)-1,1,1,3,3,3-hexafluoropropane, 2,2-bis(4-aminophenyl)-1,1,1,3,3,3-hexafluoropropane, 3,3'-diaminodiphenyl sulfoxide, 3,4'-diaminodiphenyl sulfoxide, 4,4'-diaminodiphenyl sulfoxide, 1,3-bis(3-aminophenyl)benzene, 1,3-bis(4-aminophenyl)benzene, 1,4-bis(3-aminophenyl)benzene, 1,4-bis(4-aminophenyl)benzene, 1,3-bis(4-aminophenoxy)benzene (TPE-R), 1,4-bis(3-aminophenoxy)benzene (TPE-Q), 1,3-bis(3-aminophenoxy)-4-trifluoromethylbenzene, 3,3'-diamino-4-(4-phenylphenoxy)benzophenone, 3,3'-diamino-4,4'-di(4-phenylphenoxy)benzophenone, 1,3-bis(3-aminophenylsulfide)benzene, 1,3-bis(4-aminophenylsulfide)benzene, 1,4-bis(4-aminophenylsulfide)benzene, 1,3-bis(3-aminophenylsulfone)benzene, 1,3-bis(4-aminophenylsulfone)benzene, 1,4-bis(4-aminophenylsulfone)benzene, 1,3-bis[2-(4-aminophenyl)isopropyl]benzene, 1,4-bis[2-(3-aminophenyl)isopropyl]benzene, 1,4-bis[2-(4-aminophenyl)isopropyl]benzene, 3,3'-bis(3-aminophenoxy)biphenyl, 3,3'-bis(4-aminophenoxy)biphenyl, 4,4'-bis(3-aminophenoxy)biphenyl, 4,4'-bis(4-aminophenoxy)biphenyl, bis[3-(3-aminophenoxy)phenyl]ether, bis[3-(4-aminophenoxy)phenyl]ether, bis[4-(3-aminophenoxy)phenyl]ether, bis[4-(4-aminophenoxy)phenyl]ether, bis[3-(3-aminophenoxy)phenyl]ketone, bis[3-(4-aminophenoxy)phenyl]ketone, bis[4-(3-aminophenoxy) phenyl] ketone, bis[4-(4-aminophenoxy)phenyl]ketone, bis[3-(3-aminophenoxy)phenyl]sulfide, bis[3-(4-aminophenoxy)phenyl]sulfide, bis[4-(3-aminophenoxy)phenyl]sulfide, bis[4-(4-aminophenoxy)phenyl]sulfide, bis[3-(3-aminophenoxy)phenyl]sulfone, bis[3-(4-aminophenoxy)phenyl]sulfone, bis[4-(3-aminophenoxy)phenyl]sulfone, bis[4-(4-aminophenoxy)phenyl]sulfone, bis[3-(3-aminophenoxy)phenyl]methane, bis[3-(4-aminophenoxy)phenyl]methane, bis[4-(3-aminophenoxy)phenyl]methane, bis[4-(4-aminophenoxy)phenyl]methane, 2,2-bis[3-(3-aminophenoxy) phenyl] propane, 2,2-bis[3-(4-aminophenoxy) phenyl] propane, 2,2-bis[4-(3-aminophenoxy)phenyl] propane, 2,2-bis[3-(3-aminophenoxy)phenyl]-1,1,1,3,3,3-hexafluoropropane, 2,2-bis[3-(4-aminophenoxy)phenyl]-1,1,1,3,3,3-hexafluoropropane, 2,2-bis[4-(3-aminophenoxy)phenyl]-1,1,1,3,3,3-hexafluoropropane, and 2,2-bis[4-(4-aminophenoxy)phenyl]-1,1,1,3,3,3-hexafluoropropane.

Specifically, the first diamine monomer may comprise at least one selected from the group consisting of paraphenylenediamine (PPD), 4,4'-diaminodiphenyl ether (ODA), metaphenylenediamine (MPD), 2,2-bisaminophenoxyphenyl propane (BAPP), and 1,3-bis(4-aminophenoxy)benzene (TPE-R), and preferably may comprise any one selected from the group consisting of 4,4'-diaminodiphenyl ether (ODA), paraphenylenediamine (PPD), and a mixture thereof.

In an embodiment, the first diamine monomer may be 4,4'-diaminodiphenyl ether (ODA) alone, or a combination of paraphenylene diamine (PPD) and 4,4'-diaminodiphenyl ether (ODA) .

In an embodiment, the polyimide varnish may comprise pyromellitic dianhydride (PMDA), 4,4'-diaminodiphenyl ether (ODA), and 6-methyl-1,3,5-triazine-2,4-diamine as polymerization units.

In an embodiment, the polyimide varnish may comprise pyromellitic dianhydride (PMDA), 4,4'-diaminodiphenyl ether (ODA), and 6-phenyl-1,3,5-triazine-2,4-diamine as polymerization units.

In an embodiment, the polyimide varnish may comprise pyromellitic dianhydride (PMDA), 4,4'-diaminodiphenyl ether (ODA), and 6-[2-(2-methylimidazol-1-yl)ethyl]-1,3,5-triazine-2,4-diamine as polymerization units.

In an embodiment, the polyimide varnish may comprise pyromellitic dianhydride (PMDA), 4,4'-diaminodiphenyl ether (ODA), and 6-chloro-1,3,5-triazine-2,4-diamine as polymerization units.

In an embodiment, the polyimide varnish may comprise pyromellitic dianhydride (PMDA), 4,4'-diaminodiphenyl ether (ODA), and 4,6-diamino-1,3,5-triazin-2-ol as polymerization units.

In an embodiment, the polyimide varnish may comprise pyromellitic dianhydride (PMDA), 4,4'-diaminodiphenyl ether (ODA), and 4-(4,6-diamino-1,3,5-triazin-2-yl)-4-oxobutanoic acid as polymerization units.

In an embodiment, the polyimide varnish may comprise pyromellitic dianhydride (PMDA), 4,4'-diaminodiphenyl ether (ODA), paraphenylene diamine (PPD), and 6-methyl-1,3,5-triazine-2,4-diamine as polymerization units.

In an embodiment, the polyimide varnish may comprise pyromellitic dianhydride (PMDA), 4,4'-diaminodiphenyl ether (ODA), paraphenylene diamine (PPD), and 6-phenyl-1,3,5-triazine-2,4-diamine as polymerization units.

In an embodiment, the polyimide varnish may comprise pyromellitic dianhydride (PMDA), 4,4'-diaminodiphenyl ether (ODA), paraphenylene diamine (PPD), and 6-[2-(2-methylimidazol-1-yl)ethyl]-1,3,5-triazine-2,4-diamine as polymerization units.

In an embodiment, the polyimide varnish may comprise pyromellitic dianhydride (PMDA), 4,4'-diaminodiphenyl ether (ODA), paraphenylene diamine (PPD), and 6-chloro-1,3,5-triazine-2,4-diamine as polymerization units.

In an embodiment, the polyimide varnish may comprise pyromellitic dianhydride (PMDA), 4,4'-diaminodiphenyl ether (ODA), paraphenylene diamine (PPD), and 4,6-diamino-1,3,5-triazin-2-ol as polymerization units.

In an embodiment, the polyimide varnish may comprise pyromellitic dianhydride (PMDA), 4,4'-diaminodiphenyl ether (ODA), paraphenylene diamine (PPD), and 4-(4,6-diamino-1,3,5-triazin-2-yl)-4-oxobutanoic acid as polymerization units.

In the present invention, based on 100 mol% of the total amount of the diamine monomers, the amount of 4,4'-diaminodiphenyl ether (ODA) may be 50 mol% or more, and specifically, 53 mol% or more, 55 mol% or more, 58 mol% or more, 60 mol% or more, 62 mol% or more, 65 mol% or more, 68 mol% or more, or 70 mol% or more. Here, the upper limit may be less than 100 mol%, specifically 99.9 mol% or less.

In addition, based on 100 mol% of the total amount of the diamine monomers, the amount of paraphenylenediamine (PPD) may be 50 mol% or less, and specifically, 45 mol% or less, 40 mol% or less, 38 mol% or less, 35 mol% or less, 33 mol% or less, 30 mol% or less, 28 mol% or less, or 25 mol% or less. Here, the lower limit may be 0 mol% or more, where 0 mol% may mean that the polyimide varnish does not contain paraphenylenediamine.

Further, specifically, based on 100 mol% of the total amount of the diamine monomers, the polyimide varnish may contain 70 to 99.9 mol% of 4,4'-diaminodiphenyl ether (ODA); 0 to 25 mol% of paraphenylenediamine (PPD); and 0.1 to 19.9 mol% of the second diamine monomer.

Further, a molar ratio of the dianhydride monomer and the diamine monomer may be 6 : 4 to 4 : 6, preferably 5.5 : 4.5 to 4.5 : 6.5, and more preferably 5 : 5.

Further, the polyimide varnish may have a polyimide solid content of 10 to 50 wt%. The lower limit of the polyimide solid content may be, for example, 11 wt% or more, 12 wt% or more, 13 wt% or more, 14 wt% or more, or 15 wt% or more, and the upper limit thereof may be, for example, 48 wt% or less, 45 wt% or less, 43 w% or less, 40 wt% or less, 38 wt% or less, 35 wt% or less, 33 wt% or less, or 30 wt% or less. By adjusting the polyimide solid content of the polyimide varnish, it is possible to control the increase in viscosity and to shorten the processing time during the curing process.

Further, the polyimide varnish of the present invention further comprises an organic solvent, wherein the organic solvent is not particularly limited as long as it is an organic solvent in which the polyamic acid is soluble, but may be, as one example, an aprotic polar solvent.

Specifically, the organic solvent may comprise at least one selected from the group consisting of N-methylpyrrolidone (NMP), N,N'-dimethylformamide (DMF), N,N'-diethylformamide (DEF), N,N'-dimethylacetamide (DMAc), dimethylpropanamide (DMPA), N,N-diethylacetamide (DEAc), dimethyl sulfoxide (DMSO), 3-methoxy-N,N-dimethylpropanamide (KJCMPA), p-chlorophenol, o-chlorophenol, gammabutyrolactone (GBL), diglyme, naphthalene, Perchloroethylene, Methyl Butyl Ketone(MBK), Oxocyclohexanol, 1-Methylcyclohexanol, Styrolene, 2-Methoxylethanol, Ethyleneglycol monoethyl ether, Phenyl Chloride, Cresol, Xylene, Tetrachloroethylene and Naphtha. Preferably, N-methyl-pyrrolidone (NMP), N,N'-dimethylformamide (DMF), N,N'-dimethylacetamide (DMAc), dimethyl sulfoxide (DMSO), Cresol, Xylene, Naphtha, etc., may be used.

Further, the organic solvent may further comprise a modifier containing a hydroxyl group (OH) or amine group (NH). Examples of the modifier containing a hydroxy group (OH) or an amine group (NH) may include ethylamine, triethanolamine, dimethylamine, trimethylamine, diethylenetriamine, ethylenediamine, tributylamine, pyridine, pyrrolidine, methanol, ethanol, propanol, isopropanol, sec-butanol, tert-butanol, n-amyl alcohol, isoamyl alcohol, hexanol, octanol, capryl alcohol, nonyl alcohol, decyl alcohol, undecyl alcohol, lauryl alcohol, myristyl alcohol, cetyl alcohol, stearyl alcohol, allyl alcohol, crotyl alcohol, propargyl alcohol, ethylene glycol, propylene glycol, benzyl alcohol, phenol, and the like. The modifier may control reactivity by reacting with the dianhydride monomer.

Further, the polyimide varnish of the present invention may further comprise nanosilica surface-modified with organosilane. The nanosilica surface-modified with organosilane of the present invention may prevent the aggregation of inorganic particles in the polyimide varnish, and may enhance the interaction with solid content (polyamic acid) due to functional groups of the compound, thereby improving dispersibility and miscibility.

The nanosilica surface-modified with organosilane of the present invention may have an average particle diameter of 1 to 200 nm, specifically, 5 to 150 nm, 5 to 100 nm, 5 to 70 nm, 10 to 50 nm, or 10 to 30 nm. The average particle diameter may be measured through equipment such as BET, SEM, zeta potential analyzer, and the like.

The organosilane of the nanosilica surface-modified with organosilane may comprise at least one selected from the group consisting of methyltrimethoxysilane, hexamethyldisiloxane, n-octyltrimethoxysilane, n-octyltriethoxysilane, isooctyltrimethoxysilane, dodecyltrimethoxysilane, octadecyltrimethoxysilane, propyltrimethoxysilane, hexyltrimethoxysilane, 3-methacryloxypropyltrimethoxysilane, 3-acryloxypropyltrimethoxysilane, 3-(methacryloxy)propyltriethoxysilane, 3-(methacryloxy)propylmethyldimethoxysilane, 3-(acryloxypropyl)methyldimethoxysilane, 3-(methacryloxy)propyldimethylethoxysilane, styrylethyltrimethoxysilane, phenyltrimethoxysilane, p-tolyltriethoxysilane, vinylmethyldiacetoxysilane, vinyldimethylethoxysilane, vinylmethyldiethoxysilane, vinyltrimethoxysilane, vinyltriethoxysilane, vinyltriacetoxysilane, vinyltriisopropoxysilane, vinyltrimethoxysilane, vinyltriphenoxysilane, vinyltri-t-butoxysilane, vinyltris(isobutoxy)silane, vinyltriisopropenoxysilane, vinyltris(2-methoxyethoxy)silane, N,N-diisopropylethylamine phenyltrimethoxysilane, glycidoxypropyl trimethoxysilane (GPTMS), (3-aminopropyl)trimethoxy-silane (APTMS), phenyltrimethoxysilane (PTMS), and N-phenyl-3-aminopropyltrimethoxysilane (PAPTES).

The nanosilica surface-modified with organosilane may be obtained by combining, on a surface of the nanosilica, a compound comprising at least one phenyl group at a terminal end and a compound comprising at least one amine group, hydroxy group, thiol group, or epoxide group at a terminal end. Specifically, the compound comprising at least one phenyl group at the terminal end may be phenyltrimethoxysilane (PTMS) or N-phenyl-3-aminopropyltrimethoxysilane (PAPTES). Further, the compound comprising at least one amine group, hydroxyl group, thiol group, or epoxide group at the terminal end may be glycidoxypropyl trimethoxysilane (GPTMS) or (3-aminopropyl)trimethoxysilane (APTMS).

The nanosilica surface-modified with the organosilane may be prepared by surface treating the nanosilica with organosilane. For example, nanosilica may be obtained by heating organosilanes under acidic or basic conditions and performing surface treatment for about 1 to 24 hours. In addition, the surface modification may be achieved by other known methods, for example, by mixing organosilanes in a solvent and reacting at a temperature of 10 to 100°C or 20 to 60°C for 1 to 10 hours or 1 to 5 hours to obtain surface-modified nanosilica. To combine two or more compounds on the surface of the nanosilica, each of the above methods may be performed.

The nanosilica surface-modified with organosilane may also be contained in an amount of 0.1 to 12.0 parts by weight, based on 100 parts by weight of the total polyimide varnish. For example, the lower limit of the amount of the nanosilica surface-modified with organosilane may be 0.2 parts by weight or more, 0.3 parts by weight or more, 0.35 parts by weight or more, 0.40 parts by weight or more, 0.45 parts by weight or more, 0.50 parts by weight or more, or 0.55 parts by weight or more. In addition, for example, the upper limit thereof may be, for example, 10 parts by weight or less, 9 parts by weight or less, 8 parts by weight or less, 7 parts by weight or less, 6 parts by weight or less, 5 parts by weight or less, 3 parts by weight or less, 2 parts by weight or less, 1.5 parts by weight or less, 1.25 parts by weight or less, 1.20 parts by weight or less, 1.15 parts by weight or less, 1.10 parts by weight or less, 1.05 parts by weight or less, 1.0 part by weight or less, 0.95 parts by weight or less, 0.9 parts by weight or less, 0.85 parts by weight or less, 0.8 parts by weight or less, 0.79 parts by weight or less, 0.78 parts by weight or less, 0.77 parts by weight or less, or 0.76 parts by weight or less. When the nanosilica is contained in the above range of amounts, it is preferable since it is effective in improving characteristics while not exhibiting deterioration of physical properties due to aggregation and reduction of usability.

Further, the polyimide varnish of the present invention may further comprise an aromatic carboxylic acid. The aromatic carboxylic acid may be further added to form an optimal molar ratio.

The aromatic carboxylic acid may comprise at least one selected from the group consisting of pyromellitic acid (PMA), 3,3',4,4'-biphenyltetracarboxylic acid (BPTA), 1,2,3,4-benzenetetracarboxylic acid, benzophenone-3,3',4,4'-tetracarboxylic acid, pyrazinetetracarboxylic acid, 2,3,6,7-naphthalenetetracarboxylic acid, and naphthalene-1,4,5,8-tetracarboxylic acid. In an embodiment, pyromellitic acid (PMA) is used.

Further, the aromatic carboxylic acid that may be further included may be added in an amount of 0 to 1.0 mol%, specifically, 0 to 0.8 mol%, and more preferably 0.1 to 0.6 mol%. Here, 0 mol% may mean that the polyimide varnish does not contain the aromatic carboxylic acid.

### Polyimide varnish and cured product thereof

In the present invention, tensile strength, modulus, and elongation, which are primarily used as criteria for determining mechanical properties of the polyimide, may be confirmed.

After curing, the polyimide varnish according to the present invention may have a tensile strength of 100 MPa or more, and the lower limit of the tensile strength may be, for example, 102 MPa, 103 MPa, 105 MPa, 107 MPa, 108 MPa, 109 MPa or 110 MPa or more. The upper limit thereof is not particularly limited, but may be 400 MPa or less. The tensile strength may be determined by preparing samples of 220 mm in length and 10 mm in width, measuring the tensile strength with a grip gap of 50 mm and a rate of 50 mm/min using INSTRON's Instron 5564 UTM according to the ASTM D-882 standard, and calculating the average of 10 samples.

After curing, the polyimide varnish according to the present invention may have a modulus of 2.0 GPa or more. The lower limit of the modulus may be, for example, 2.1 GPa or more, 2.2 GPa or more, 2.3 GPa or more, 2.4 GPa or more, or 2.5 GPa or more, and the upper limit thereof is not particularly limited, but may be 10 GPa or less. The modulus may be determined by preparing samples of 220 mm in length and 10 mm in width, measuring the modulus at a rate of 50 mm/min using INSTRON's Instron 5564 UTM according to the ASTM D-882 standard, and calculating the average of 10 samples.

After curing, the polyimide varnish according to the present invention may have an elongation of 8% or more, and the lower limit of the elongation may be, for example, 8.5%, 9%, 9.5%, 10%, 10.5%, 11%, or 12% or more. The upper limit thereof is not particularly limited, but may be 80% or less. In an embodiment, the elongation may be determined by preparing a sample of 220 mm in length and 10 mm in width and measuring an elongation at a rate (50 mm/min) using INSTRON's Instron 5564 UTM according to the ASTM D-882 standard.

In the present invention, the thermal decomposition temperature (Td), glass transition temperature (Tg), and coefficient of thermal expansion (CTE), which are primarily used as criteria for determining thermal properties of the polyimide, may be confirmed.

After curing, the polyimide varnish according to the present invention may have a glass transition temperature (Tg) of 300°C or higher, and the lower limit of the glass transition temperature may be, for example, 310°C ± 5°C, 320°C ± 5°C, 330°C ± 5°C, 340°C ± 5°C, or 350°C ± 5°C or higher. The upper limit thereof is not particularly limited, but may be 600°C or lower. The glass transition temperature may be measured for polyimide at 5°C/min using dynamic mechanical analysis (DMA).

After curing, the polyimide varnish according to the present invention may have a temperature at which 1% weight loss occurs, i.e., the 1 wt% thermal decomposition temperature (Td), of 340°C or higher, and the lower limit of the 1 wt% thermal decomposition temperature (Td) may be, for example, 342°C ± 2°C, 345°C ± 2°C, 350°C ± 2°C, 355°C ± 2°C, 360°C ± 2°C, 365°C ± 2°C, 370°C ± 2°C, 375°C ± 2°C, or 380°C ± 2°C or higher. The upper limit thereof is not particularly limited, but may be 600°C or lower. Further, a temperature at which 5% weight loss occurs, i.e., the 5 wt% thermal decomposition temperature (Td), may be 500°C or higher, and the lower limit of the 5 wt% thermal decomposition temperature (Td) may be, for example, 510°C ± 2°C, 515°C ± 2°C, 520°C ± 2°C, 525°C ± 2°C, 530°C ± 2°C, 533°C ± 2°C, 535°C ± 2°C or higher. Here, the upper limit thereof is not particularly limited, but may be 750°C or lower. The thermal decomposition temperature may be measured using TA's thermogravimetric analyzer Q50. In a specific example, the polyimide may be heated up to 150°C at a rate of 10°C/min under a nitrogen atmosphere and then maintained isothermally for 30 minutes to remove moisture. Then, the temperature may be raised up to 600°C at a rate of 10°C/min, and the temperature at which 1% or 5% weight loss occurs may be measured.

After curing, the polyimide varnish according to the present invention may have, in the range of 100°C to 350°C, a coefficient of thermal expansion of 30 ppm/°C or more, and the lower limit of the coefficient of thermal expansion may be, for example, 31 ppm/°C, 32 ppm/°C, 33 ppm/°C, 34 ppm/°C or 35 ppm/°C or more. The upper limit thereof is not particularly limited, but may be 70 ppm/°C or less. In an embodiment, the coefficient of thermal expansion may be determined by measuring the slope in the range of 100 to 250°C with a thermogravimetric analyzer (TMA) when raising a temperature from room temperature to 350°C at a rate of 10°C/min.

In the present invention, the dielectric constant and dielectric breakdown strength, which are primarily used as criteria for determining electrical properties of the polyimide, may be confirmed.

After curing, the polyimide varnish according to the present invention may have a dielectric constant of 4 or less, and the upper limit of the dielectric constant may be, for example, 3.9 or less, 3.85 or less, 3.8 or less, 3.75 or less, or 3.7 or less, and the lower limit thereof may be, but is not particularly limited to, 2.0 or more. Here, the dielectric constant may be measured at 10 GHz using a Keysight's split post dielectric resonator (SPDR).

After curing, the polyimide varnish according to the present invention may have a breakdown voltage (BDV) of 100 kV/mm or more as measured according to ASTM D149 standard, and the lower limit of the breakdown voltage may be, for example, 105 kV/mm or more, 110 kV/mm or more, 115 kV/mm or more, 120 kV/mm or more, 125 kV/mm or more, 130 kV/mm or more, 135 kV/mm or more, 140 kV/mm or more, or 145 kV/mm or more. The upper limit thereof is not particularly limited, but may be 500 kV/mm or less. Specifically, the breakdown voltage (BDV) may be measured by pretreating each sample in an oven at 100°C to remove moisture, fixing the samples to a measuring instrument (PHENIX TECHNOLOGIES 6CCE50-5) set in a room temperature atmosphere, and applying a voltage of 10KVAc to the electrode to increase the AC voltage from 0 at a constant rate.

In the present invention, the peel strength and adhesion through the Crosscut Test, which are mainly used as criteria for determining the adhesive property of the polyimide, may be confirmed.

After curing, the polyimide varnish according to the present invention may have peel strength of 3.0 N/cm or more, and the lower limit of the peel strength may be, for example, 3.1 N/cm or more, 3.2 N/cm or more, 3.3 N/cm or more, 3.4 N/cm or more, or 3.5 N/cm or more, and the lower limit thereof is not particularly limited, but may be at a non-peelable level. Here, as to the peel strength, the 90° peel strength may be measured using UTM (Instron model 5564) while peeling a sample at 50 mm/sec under conditions of 23°C and 50%RH.

After curing, the polyimide varnish according to the present invention may have a crosscut adhesion of 3B or higher, preferably 4B or higher, as measured by ASTM D 3359 standard, and the upper limit of the crosscut adhesion is not particularly limited, but may be 5B or lower. Here, the crosscut adhesion may be measured by the method presented in ASTM D 3359.

Further, the polyimide varnish according to the present invention may have a viscosity in the range of 200 to 50,000 cP, the viscosity being measured at a temperature of 23°C and a shear rate of 1s⁻¹. Specifically, the lower limit of the viscosity of the polyimide solution may be 300 cP or more, 400 cP or more, 500 cP or more, 600 cP or more, 700 cP or more, 800 cP or more, 900 cP or more, or 1,000 cP or more, and the upper limit thereof may be 45,000 cP or less, 40,000 cP or less, 35,000 cP or less, 30,000 cP or less, 25,000 cP or less, 20,000 cP or less, 18,000 cP or less, 16,000 cP or less, 15,000 cP or less, 14,000 cP or less, 13,000 cP or less, 12,000 cP or less, 11,000 cP or less, or 10,000 cP or less. It is possible to manufacture a polyimide cured product with excellent processability and desired physical properties, by adjusting the viscosity range of the polyimide varnish.

In another aspect of the present invention, there is provided a polyimide cured product obtained by curing the polyimide varnish as described above, wherein the polyimide cured product may be a polyimide film.

In still another aspect of the present invention, there is provided a polyimide prepared by imidizing the polyimide varnish as described above, wherein the polyimide may be in the form of a film.

In still another aspect of the present invention, there is provided a polyimide coating material comprising the polyimide cured product.

In an embodiment, a method of preparing the polyimide coating material may comprise coating a polyimide varnish on a conductor surface; and imidizing the polyimide varnish coated on the conductor surface.

The conductor may be a copper wire made of copper or a copper alloy, but may also comprise conductors made of other metal materials such as silver wire, etc., or various metalplated wires such as aluminum or tin-plated conducting wires, etc. The conductor and coating material may have a thickness according to the KS C3107 standard. A diameter of the conductor may be in the range of 0.3 to 3.2 mm, and a standard film thickness of the coating material (average value of the maximum film thickness and minimum film thickness) may be 21 to 194 µm for type 0, 14 to 169 µm for type 1, and 10 to 31 µm for type 2. Depending on the cross-sectional shape of the conductor, the conductor may have a round shape, a rectangular shape, a hexagonal shape, etc., but is not limited thereto.

In another general aspect, the present invention provides an electric wire comprising the polyimide coating material.

Specifically, the wire may be a coating wire comprising the polyimide coating material prepared by coating the polyimide varnish on a surface of the wire, followed by imidization. In an embodiment, the coating wire may comprise an electric wire; and a coating material in which the above-described polyimide is coated on a surface of the electric wire and imidized.

Further, the present invention may provide an electronic device comprising the coating wire. The electronic device may be, for example, an electric motor.

Further, in still another aspect, there is provided a component comprising a molded body formed from the polyimide varnish.

Specifically, the component may be electronic circuit board members, semiconductor devices, lithium ion battery members, solar cell members, fuel cell members, motor windings, engine peripheral members, paints, optical components, heat insulators, electromagnetic shielding materials, surge components, dental materials, slide coatings, and electrostatic chucks.

### DETAILED DESCRIPTION OF EMBODIMENTS

The following exemplary embodiments are presented to help understanding of the present invention. The following Examples are only provided to more easily understand the present invention, but the content of the present invention is not limited by these Examples.

### <Example>

### Example 1. Polyimide varnish

Dimethylacetamide (DMAc) solvent was added to a reaction vessel purged with nitrogen gas, and nanosilica surface-treated with organosilane (0.5 to 0.75 mol% based on the amount of diamine and dianhydride) and pyromellitic dianhydride (PMDA) (92 mol%) were mixed and stirred at 40°C for 30 minutes. Next, triazine-based diamine was added and stirred for 30 minutes, then paraphenylene diamine (PPD) and/or 4,4'-diaminodiphenyl ether (ODA) and pyromellitic dianhydride (PMDA) (8 mol%) were added, followed by stirring and polymerizing at 40°C for about 1 hour, to prepare a polyimide varnish (solid content of 15-30%, viscosity at 30°C of 1,000-10,000 cP).

### Examples 2 to 24 and Reference Examples 1 to 6

Each polyimide varnish was prepared using the same method as in Example 1, except that the amount of each component or the type of triazine-based diamine was changed as described in Table 1.

### Comparative Examples 1 and 2

Each polyimide varnish was prepared using the same method as in Example 1, except that the amount of each component or the type of triazine-based diamine was changed as described in Table 1.

**[Table 1]**

| Classificat ion | Triazine-based diamine | Dianhydride (mol%) | Diamine (mol%) | | |
|---|---|---|---|---|---|
| | | PMDA | PPD | ODA | Triazine-based |
| | | | | | diamine |
| Example 1 | 6-Methyl-1,3,5-triazine-2,4-diamine | 100 | 0 | 98 | 2 |
| Example 2 | | 100 | 0 | 95 | 5 |
| Example 3 | | 100 | 0 | 91 | 9 |
| Example 4 | | 100 | 25 | 70 | 5 |
| Reference Example 1 | | 100 | 0 | 90 | 10 |
| Example 5 | 6-Phenyl-1,3,5-triazine-2,4-diamine | 100 | 0 | 98 | 2 |
| Example 6 | | 100 | 0 | 95 | 5 |
| Example 7 | | 100 | 0 | 91 | 9 |
| Example 8 | | 100 | 25 | 70 | 5 |
| Reference Example 2 | | 100 | 0 | 90 | 10 |
| Example 9 | 6-[2-(2-Methylimidazol-1-yl)ethyl]-1,3,5-triazine-2,4-diamine | 100 | 0 | 98 | 2 |
| Example 10 | | 100 | 0 | 95 | 5 |
| Example 11 | | 100 | 0 | 91 | 9 |
| Example 12 | | 100 | 25 | 70 | 5 |
| Reference Example 3 | | 100 | 0 | 90 | 10 |
| Example 13 | 4-(4,6-Diamino-1,3,5-triazin-2-yl)-4-oxobutanoic acid | 100 | 0 | 98 | 2 |
| Example 14 | | 100 | 0 | 95 | 5 |
| Example 15 | | 100 | 0 | 91 | 9 |
| Example 16 | | 100 | 25 | 70 | 5 |
| Reference Example 4 | | 100 | 0 | 90 | 10 |
| Example 17 | 6-Chloro-1,3,5-triazine-2,4-diamine | 100 | 0 | 98 | 2 |
| Example 18 | | 100 | 0 | 95 | 5 |
| Example 19 | | 100 | 0 | 91 | 9 |
| Example 20 | | 100 | 25 | 70 | 5 |
| Reference Example 5 | | 100 | 0 | 90 | 10 |
| Example 21 | 4,6-Diamino-1,3,5-triazin-2-ol | 100 | 0 | 98 | 2 |
| Example 22 | | 100 | 0 | 95 | 5 |
| Example 23 | | 100 | 0 | 91 | 9 |
| Example 24 | | 100 | 25 | 70 | 5 |
| Reference Example 6 | | 100 | 0 | 90 | 10 |
| Comparative Example 1 | - | 100 | 0 | 100 | 0 |
| Comparative Example 2 | - | 100 | 25 | 75 | 0 |

The abbreviations in Table 1 are defined as follows:
PMDA: Pyromellitic dianhydride
PPD: Paraphenylene diamine
ODA: 4,4'-Diaminodiphenyl ether

### Example 25. Polyimide film (polyimide cured product)

The polyimide varnish prepared according to Example 1 was rotated at a high speed of 2,000 rpm to remove air bubbles. Then, the polyimide varnish was coated with a thickness of 20 to 26 µm on a soda-lime glass substrate using a spin coater. Next, a polyimide film was obtained by curing under the conditions of 110°C (20 minutes) → 150°C (20 minutes) → 200°C (20 minutes) → 300°C (20 minutes) under a nitrogen atmosphere.

### Examples 26 to 48 and Reference Examples 7 to 12

Each polyimide film was manufactured using the same method as in Example 25, except that the polyimide varnish was changed as described in Table 2.

Meanwhile, Reference Examples 7 to 12, which contained 10 mol% or more of triazine-based diamine, specifically 6-methyl-1,3,5-triazine-2,4-diamine, 6-phenyl-1,3,5-triazine-2,4-diamine, 6-[2-(2-methylimidazol-1-yl)ethyl]-1,3,5-triazine-2,4-diamine, 4-(4,6-diamino-1,3,5-triazin-2-yl)-4-oxobutanoic acid, 6-chloro-1,3,5-triazine-2,4-diamine, or 4,6-diamino-1,3,5-triazin-2-ol, were broken during the curing step and failed to form a film.

### Comparative Examples 3 and 4

Each polyimide film was manufactured using the same method as in Example 25, except that the polyimide varnish was changed as described in Table 2.

**[Table 2]**

| Examples | Polyimide Varnish | Whether or not film is formed |
|---|---|---|
| Example 25 | Example 1 | ○ |
| Example 26 | Example 2 | ○ |
| Example 27 | Example 3 | ○ |
| Example 28 | Example 4 | ○ |
| Reference Example 7 | Reference Example 1 | X |
| Example 29 | Example 5 | ○ |
| Example 30 | Example 6 | ○ |
| Example 31 | Example 7 | ○ |
| Example 32 | Example 8 | ○ |
| Reference Example 8 | Reference Example 2 | X |
| Example 33 | Example 9 | ○ |
| Example 34 | Example 10 | ○ |
| Example 35 | Example 11 | ○ |
| Example 36 | Example 12 | ○ |
| Reference Example 9 | Reference Example 3 | X |
| Example 37 | Example 13 | ○ |
| Example 38 | Example 14 | ○ |
| Example 39 | Example 15 | ○ |
| Example 40 | Example 16 | ○ |
| Reference Example 10 | Reference Example 4 | X |
| Example 41 | Example 17 | ○ |
| Example 42 | Example 18 | ○ |
| Example 43 | Example 19 | ○ |
| Example 44 | Example 20 | ○ |
| Reference Example 11 | Reference Example 5 | X |
| Example 45 | Example 21 | ○ |
| Example 46 | Example 22 | ○ |
| Example 47 | Example 23 | ○ |
| Example 48 | Example 24 | ○ |
| Reference Example 12 | Reference Example 6 | X |
| Comparative Example 3 | Comparative Example 1 | ○ |
| Comparative Example 4 | Comparative Example 2 | ○ |

### <Experimental Examples>

### Experimental Example 1. Evaluation of Mechanical and Thermal Properties

Physical properties of the cured products of Examples 25 to 48, which were manufactured by curing the polyimide varnishes prepared according to Examples 1 to 24, were confirmed by the following method, and the results are shown in Table 3 below.

### (1) Tensile strength, Young's modulus, and Elongation

With respect to the polyimide films manufactured according to Examples and Comparative Examples, samples were prepared with 50 mm in length and 10 mm in width and measured at a rate (50 mm/min) using INSTRON's Instron 5564 UTM, and the average of 10 samples was calculated. Results thereof are shown in Table 3 below.

### (3) Temperature at Which 1% Weight Loss (Td) and Temperature at Which 5% Weight Loss (Td)

TA's thermogravimetric analyzer Q50 was used, and each polyimide film manufactured according to Examples and Comparative Examples was heated up to 150°C at a rate of 10°C/min under a nitrogen atmosphere and then maintained isothermally for 30 minutes to remove moisture. Then, the temperature at which 1% or 5% weight loss occurred by heating up to 600°C at a rate of 10°C/min was measured. Results thereof are shown in Table 3 below.

### (5) Glass Transition Temperature (Tg)

The glass transition temperature of each polyimide film manufactured according to Examples and Comparative Examples was measured using DMA at 5°C/min up to 350°C. Results thereof are shown in Table 3 below.

### (6) Coefficient of Thermal Expansion (CTE)

The above coefficient of thermal expansion was determined by measuring the slope in the range of 100 to 250°C with TA's thermogravimetric analyzer (TMA) Q400 when raising a temperature from room temperature up to 350°C at a rate of 10°C/min. Results thereof are shown in Table 3 below.

**[Table 3]**

| Polyimid e Film | Polyimid e Varnish | Mechanical Properties | | | Thermal Properties | | | |
|---|---|---|---|---|---|---|---|---|
| | | Tensi le Stren gth (MPa) | Modulu s (GPa) | Elong ation | Temper ature at 1 wt% weight loss | Temper ature at 5 wt% weight loss | Glass Transi tion Temper ature | CTE (ppm/ °C) |
| Example 25 | Example 1 | 130 | 2.5 | 54% | 427°C | 555°C | 395°C | 41 |
| Example 26 | Example 2 | 122 | 3.0 | 30% | 422°C | 557°C | 382°C | 44 |
| Example 27 | Example 3 | 118 | 3.0 | 25% | 410°C | 553°C | 375°C | 44 |
| Example 28 | Example 4 | 121 | 3.3 | 13% | 399°C | 553°C | 391°C | 40 |
| Example 29 | Example 5 | 114 | 2.9 | 18% | 397°C | 533°C | 398°C | 38 |
| Example 30 | Example 6 | 112 | 3.1 | 16% | 408°C | 553°C | 390°C | 48 |
| Example 31 | Example 7 | 109 | 3.2 | 14% | 411°C | 568°C | 380°C | 50 |
| Example 32 | Example 8 | 126 | 3.6 | 13% | 391°C | 548°C | 401°C | 37 |
| Example 34 | Example 10 | 107 | 2.6 | 19% | 382°C | 548°C | 376°C | 48 |
| Example 35 | Example 11 | 105 | 2.7 | 16% | 376°C | 552°C | 396°C | 50 |
| Example 36 | Example 12 | 128 | 3.3 | 23% | 388°C | 551°C | 398°C | 40 |
| Example 38 | Example 14 | 114 | 2.9 | 18% | 361°C | 533°C | 378°C | 48 |
| Example 39 | Example 15 | 109 | 3.0 | 16% | 369°C | 535°C | 384°C | 48 |
| Example 40 | Example 16 | 115 | 3.0 | 16% | 345°C | 520°C | 370°C | 38 |
| Example 42 | Example 18 | 117 | 2.9 | 13% | 394°C | 562°C | 403°C | 50 |
| Example 43 | Example 19 | 103 | 2.7 | 9% | 400°C | 576°C | 396°C | 49 |
| Example 44 | Example 20 | 121 | 3.1 | 11% | 384°C | 547°C | 385°C | 31 |
| Example 46 | Example 22 | 105 | 2.8 | 16% | 364°C | 536°C | 364°C | 47 |
| Example 47 | Example 23 | 109 | 2.8 | 15% | 370°C | 553°C | 370°C | 48 |
| Example 48 | Example 24 | 117 | 3.0 | 17% | 388°C | 550°C | 387°C | 34 |

Table 3 showed that the polyimide films of Examples 25 to 48, which contained an appropriate amount of triazine-based diamine, had both good mechanical and thermal properties.

### Experimental Example 2. Evaluation of Electrical Characteristics

Physical properties of the cured products of Examples 25 to 48, which were manufactured by curing the polyimide varnishes prepared according to Examples 1 to 24, were confirmed by the following method, and the results are shown in Table 4 below.

### (1) Dielectric Constant

With respect to the polyimide films manufactured according to Examples and Comparative Examples, the dielectric constant of each sample at 10 GHz was measured under the conditions of 23°C and 50%RH using a Keysight's split post dielectric resonator (SPDR), and the average of 2 to 3 samples was calculated. Results thereof are shown in Table 2 below.

### (2) Dielectric Breakdown Strength

The breakdown voltage (BDV) values of polyimide films manufactured according to Examples and Comparative Examples were measured according to the ASTM D149 standard, and the average of 8 samples was calculated. Specifically, the breakdown voltage (BDV) was measured by pretreating each polyimide film in an oven at 100°C to remove moisture, fixing the films to a measuring instrument (PHENIX TECHNOLOGIES 6CCE50-5) set in a room temperature atmosphere, and applying a voltage of 10KVAc to the electrode to increase the AC voltage from 0 at a constant rate. Results thereof are shown in Table 4 below.

**[Table 4]**

| Polyimide Film | Polyimide Varnish | Electrical Properties | |
|---|---|---|---|
| | | Dielectric Constant @10GHz | Dielectric Breakdown Strength (kV/mm) |
| Example 25 | Example 1 | 3.43 | 257 |
| Example 26 | Example 2 | 3.58 | 244 |
| Example 27 | Example 3 | 3.63 | 205 |
| Example 28 | Example 4 | 3.54 | 196 |
| Example 29 | Example 5 | 3.51 | 260 |
| Example 30 | Example 6 | 3.62 | 266 |
| Example 31 | Example 7 | 3.65 | 224 |
| Example 32 | Example 8 | 3.66 | 223 |
| Example 34 | Example 10 | 3.63 | 247 |
| Example 35 | Example 11 | 3.68 | 208 |
| Example 36 | Example 12 | 3.79 | 246 |
| Example 38 | Example 14 | 3.63 | 241 |
| Example 39 | Example 15 | 3.66 | 210 |
| Example 40 | Example 16 | 3.58 | 255 |
| Example 42 | Example 18 | 3.61 | 249 |
| Example 43 | Example 19 | 3.65 | 203 |
| Example 44 | Example 20 | 3.60 | 247 |
| Example 46 | Example 22 | 3.64 | 249 |
| Example 47 | Example 23 | 3.69 | 210 |
| Example 48 | Example 24 | 3.67 | 231 |

Table 4 showed that all of the polyimide films of Examples 25 to 48, which contained an appropriate amount of triazine-based diamine, also had good electrical properties.

### Experimental Example 3. Evaluation of Adhesion

Physical properties of the cured products of Examples 25 to 48 and Comparative Examples 3 and 4, which were manufactured by curing the polyimide varnishes prepared according to Examples 1 to 24 and Comparative Examples 1 and 2, were confirmed by the following method, and the results are shown in Table 5 below.

### (1) Peel Strength

The polyimide varnishes prepared in Examples and Comparative Examples were applied on Cu foil, followed by spin-coating and curing, to coat a polyimide cured product (film) on the Cu foil. The peel strength was measured while peeling the copper foil (Cu foil) layer and the polyimide cured product layer using UTM (Instron model 5564). The strength was measured by fixing the polyimide cured layer (film layer) to the upper grip and the copper foil (Cu foil) layer to the lower grip, and then applying force at a peeling angle of 90° and a peeling speed of 50 mm/min under the conditions of 23°C and 50%RH. Results thereof are shown in Table 5 below.

### (2) Crosscut Adhesion (Crosscut Test)

The crosscut adhesion of each polyimide film manufactured according to Examples and Comparative Examples was measured using the method presented in ASTM D 3359, and the results are shown in Table 5 below. Specifically, polyimide films manufactured according to Examples and Comparative Examples were cut into a checkerboard pattern at 1 mm intervals using a cutter, then a peeling test was performed using a dedicated tape, and the degree of peeling was recorded. A lower peeling number signifies greater reliability as an insulator, which is desirable. (5B indicates that the peeled area is 0% of the total; 4B means that the peeled area is more than 0% to less than 5% of the total; 3B means that the peeled area is 5% or more and less than 15%; 2B means that the peeled area is 15% or more and less than 35%; and 1B means that the peeled area is 35% or more and less than 65%)

**[Table 5]**

| Polyimide Film | Polyimide Varnish | Cu Adhesive Property | |
|---|---|---|---|
| | | Peel Strength (N/cm) | Crosscut Test |
| Example 26 | Example 2 | Non-peelable | 4B |
| Example 27 | Example 3 | Non-peelable | 4B |
| Example 28 | Example 4 | Non-peelable | 4B |
| Example 30 | Example 6 | Non-peelable | 4B |
| Example 31 | Example 7 | Non-peelable | 4B |
| Example 32 | Example 8 | Non-peelable | 5B |
| Example 34 | Example 10 | 3.6 | 3B |
| Example 35 | Example 11 | 4.1 | 4B |
| Example 36 | Example 12 | 3.7 | 4B |
| Example 38 | Example 14 | Non-peelable | 4B |
| Example 39 | Example 15 | Non-peelable | 4B |
| Example 40 | Example 16 | Non-peelable | 5B |
| Example 42 | Example 18 | Non-peelable | 4B |
| Example 43 | Example 19 | Non-peelable | 4B |
| Example 44 | Example 20 | Non-peelable | 4B |
| Example 46 | Example 22 | Non-peelable | 4B |
| Example 47 | Example 23 | Non-peelable | 4B |
| Example 48 | Example 24 | Non-peelable | 5B |
| Comparative Example 3 | Comparative Example 1 | 2.4 | 2B |
| Comparative Example 4 | Comparative Example 2 | 2.9 | 1B |

Table 5 showed that the polyimide films according to Examples 26 to 28, 30 to 32, 34 to 36, 38 to 40, 42 to 44, and 46 to 48 containing an appropriate amount of triazine-based diamine had significantly improved copper (Cu) adhesion. Meanwhile, Comparative Examples 3 and 4 without containing a triazine-based diamine exhibited slightly low crosscut adhesion (Crosscut Test) results of 2B and 1B, respectively.

Upon analyzing the combined results of Experimental Examples 1 to 3, it was determined that the polyimide varnish of the present invention and the film comprising the same had stable mechanical, thermal, and electrical properties while greatly improving the adhesion to Cu by containing the specific triazine-based diamine. In particular, it is quite limited and difficult to obtain polyimide varnishes that satisfy multiple properties including the above-described effects simultaneously, as it is common for one property to be improved while another property is deteriorated. Thus, the present invention has technical significance in that it has discovered an optimal monomer component and component ratio while exhibiting excellent various physical properties.

The polyimide varnish of the present invention has excellent adhesion and adherence to wires such as copper, and thus has excellent usability as an insulating coating material for an electric wire, etc.

In the present specification, the detailed description of the contents capable of being sufficiently recognized and inferred by those skilled in the art of the present invention are omitted, and many variations and modification can be made within a range that does not change the technical spirit or essential configuration of the present invention in addition to the specific exemplary embodiments described in the present specification. Therefore, the present invention may also be practiced in a manner different from that specifically described and illustrated herein, which can be understood by those skilled in the art.

## Claims

1. A polyimide varnish comprising a dianhydride monomer and a diamine monomer as polymerization units, wherein the diamine monomer comprises a first diamine monomer and a second diamine monomer, and the second diamine monomer is represented by the following Chemical Formula 1: 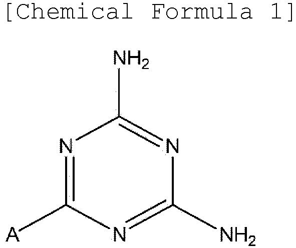 in Chemical Formula 1 above,
A may be unsubstituted or substituted, and is hydrogen, halogen, C₁-C₆ alkyl, phenyl, (C₁-C₆ alkylene) - (C₃-C₅ heteroaryl), (C₁-C₆ alkylene) -COOH, or -OH, wherein the substitution means substitution with halogen, C₁-C₃ alkyl, C₁-C₃ haloalkyl or oxo(=O).

2. The polyimide varnish of claim 1, wherein the A is hydrogen, fluoro (F), chloro (Cl), bromo (Br), methyl, ethyl, propyl, phenyl, (C₁-C₆ alkylene) -imidazolyl, (C₁-C₆ alkylene)-COOH, or -OH, and
the A is unsubstituted or substituted with at least one or more methyl, ethyl, trifluoromethyl, or oxo (=O).

3. The polyimide varnish of claim 1 or 2, wherein a carbon-to-nitrogen ratio (C/N) of the second diamine monomer is 0.5 to 2.5.

4. The polyimide varnish of any one of claims 1 to 3, wherein the second diamine monomer comprises at least one selected from the group consisting of 1,3,5-triazine-2,4-diamine, 6-chloro-1,3,5-triazine-2,4-diamine, 4,6-diamino-1,3,5-triazin-2-ol, 6-methyl-1,3,5-triazine-2,4-diamine, 6-phenyl-1,3,5-triazine-2,4-diamine, 6-[2-(2-methylimidazol-1-yl)ethyl]-1,3,5-triazine-2,4-diamine, and 4-(4,6-diamino-1,3,5-triazin-2-yl)-4-oxobutanoic acid.

5. The polyimide varnish of any one of claims 1 to 4, wherein based on 100 mol% of the total amount of the diamine monomers,
an amount of the first diamine monomer is more than 90 mol% and less than or equal to 99.9 mol%, and
an amount of the second diamine monomer is 0.1 mol% or more and less than 10 mol%.

6. The polyimide varnish of any one of claims 1 to 5, wherein based on 100 mol% of the total amount of the diamine monomers,
an amount of the first diamine monomer is 90.5 mol% to 99 mol%, and
an amount of the second diamine monomer is 1 mol% to 9.5 mol%.

7. The polyimide varnish of any one of claims 1 to 6, wherein based on 100 mol% of the total amount of the diamine monomers,
an amount of the first diamine monomer is 91 mol% to 98 mol%, and
an amount of the second diamine monomer is 2 mol% to 9 mol%.

8. The polyimide varnish of any one of claims 1 to 7, wherein the dianhydride monomer comprises pyromellitic dianhydride (PMDA).

9. The polyimide varnish of any one of claims 1 to 8, wherein the first diamine monomer comprises any one selected from the group consisting of 4,4'-diaminodiphenyl ether (ODA), paraphenylenediamine (PPD), and a mixture thereof.

10. The polyimide varnish of claim 9, wherein an amount of the 4,4'-diaminodiphenyl ether (ODA) is 50 mol% or more based on 100 mol% of the total amount of the diamine monomers.

11. The polyimide varnish of any one of claims 1 to 10, wherein the polyimide varnish after curing has a tensile strength of 100 MPa or more, a modulus of 2.0 GPa or more, and an elongation of 8% or more.

12. The polyimide varnish of any one of claims 1 to 11, wherein
the polyimide varnish after curing has a glass transition temperature of 300°C or higher,
a temperature (Td) at which 1% weight loss occurs of 340°C or higher,
a temperature (Td) at which 5% weight loss occurs of 500°C or higher, and
a coefficient of thermal expansion (CTE) of 30 ppm/°C or more in the range of 100°C to 350°C.

13. The polyimide varnish of any one of claims 1 to 12, wherein the polyimide varnish after curing has a crosscut adhesion of 3B or higher according to ASTM D 3359 standard.

14. The polyimide varnish of any one of claims 1 to 13, wherein the polyimide varnish after curing has peel strength of 3.0 N/cm or more.

15. A polyimide cured product manufactured by curing the polyimide varnish according to any one of claims 1 to 14.
